# EUROPEAN PATENT APPLICATION

(11) **EP 4 098 873 A1**
(43) Date of publication of application: **07.12.2022**
(21) Application number: 21177163.9
(22) Date of filing: 01.06.2021
(51) Int. Cl.: F04B 17/03, A61C 17/02, F04B 23/02, F04B 43/04, F04B 53/14, F04B 53/16

(54) **PISTON PUMP**

(71) Applicant: Shenzhen Yuxinyuan Electronic Technology Co.,Ltd., Guanlan Street, Longhua District, Shenzhen (CN)
(72) Inventor: Yu, Lei, Shenzhen (CN)
(74) Representative: Zaboliene, Reda

(57) **Abstract**

A piston pump includes a housing, a driving assembly, a pump, and a nozzle assembly. The housing includes upper and lower brackets. The driving assembly is in the housing and includes a gear motor and a piston. The pump includes a pump body in the housing, a pressing plate with one end of the piston extending into the pump body, and a pressing membrane on the piston for sealing a space between the pump body and the piston; the pump body cooperates with the housing to position the pressing membrane; an intermediate portion of the pressing membrane reciprocates as the piston repeatedly moves back and forth; the pump further comprises a pushing member in the pump body for sealing the pump body; and one end of the pushing member extends into the piston. The nozzle assembly includes a nozzle and a nozzle seat disposed in the pump body.

## Description

### BACKGROUND OF THE INVENTION

### 1. Field of the Invention

The invention relates to pumps for oral irrigator and more particularly to a piston pump.

### 2. Description of Related Art

A conventional oral irrigator is used to clean the mouth by flowing pressurized water flow through gaps between the teeth and onto the teeth. Pump of the conventional oral irrigator comprises one or two racetrack waterproof pistons made of silicone, and a unidirectional valve adapted to move back and forth repeatedly in the pump for flowing pressurized water out of the pump. However, the piston may be worn after a period of time of use. As such, there is leak in the pump and in turn it may damage both a printed circuit board (PCB) and a motor. As an end, the oral irrigator is malfunctioned and the unidirectional valve is damaged.

Thus, the need for improvement still exists.

### SUMMARY OF THE INVENTION

The invention has been made in an effort to solve the problems of the conventional art including piston being worn after a period of time of use, leak in the pump, and both the PCB and the motor being damaged, the oral irrigator being malfunctioned and the unidirectional valve being damaged by providing a piston pump having novel characteristics.

For achieving above and other objects, the invention provides a piston pump, comprising a housing, a driving assembly, a pump, and a nozzle assembly wherein the housing includes an upper bracket and a lower bracket; the driving assembly is disposed in the housing and includes a gear motor and a piston transmission connected to the gear motor; the pump includes a pump body disposed in the housing, a pressing plate disposed in the housing with one end of the piston extending into the pump body, and a pressing membrane disposed on the piston and configured to seal a space between the pump body and the piston; the pump body cooperates with the housing to position the pressing membrane; an intermediate portion of the pressing membrane reciprocates as the piston repeatedly moves back and forth; the pump further comprises a pushing member disposed in the pump body and configured to cooperate with the pressing membrane to seal the pump body, and an inlet adjacent to the pump body; and one end of the pushing member extends into the piston; and the nozzle assembly includes a nozzle and a nozzle seat disposed in the pump body.

Preferably, the driving assembly further comprises a disc type bevel gear disposed in the housing, and an output end of the gear motor meshes with the disc type bevel gear.

Preferably, the driving assembly further comprises an eccentric bar disposed at a top of the disc type bevel gear, the eccentric bar extending into the piston.

Preferably, the housing further comprises a battery disposed in one side of the housing, the pressing plate is disposed in the housing, and the pump body is moveably disposed in the pressing plate.

Preferably, the pump further comprises an outlet valve disposed in the pump body, the outlet valve having one end extended into the nozzle seat.

Preferably, the pump further comprises an outlet spring disposed on the outlet valve and an outlet switch pressing plate disposed at one end of the outlet spring.

Preferably, the pump further comprises an inlet spring disposed in the inlet, an inlet valve with the inlet spring put thereon, and an inlet switch pressing plate disposed at one end of the inlet spring.

Preferably, the pump further comprises an inlet silicone hose having one end connected to the inlet, and an adapter disposed at the other end of the inlet silicone hose.

Preferably, one end of the nozzle extends into the nozzle seat, and the nozzle assembly further comprises a lock disposed on one end of the nozzle proximate the nozzle seat.

Preferably, further comprises a plurality of sealing rings disposed on and inside the nozzle seat.

The invention has the following advantages and benefits in comparison with the conventional art:
With the provision of the piston, the pump body, and the pushing member which cooperates with the piston, ensures a waterproof seal when the piston repeatedly moves forth and back. In comparison with the conventional waterproof pistons made of silicone, the piston pump of the invention has simplified components, improved seal of the pump body, waterproofness of the pump body in use, and wide applications.

With the provision of the outlet valve and the inlet valve in cooperation with each other, when the pump body pumping water, the outlet valve is sucked tighter due to applied sucking force; when the pump body draining water, the inlet valve is pushed tighter due to applied pushing force; and it eliminates the problem of the conventional unidirectional valve being damaged and ensures waterproofness.

The above and other objects, features and advantages of the invention will become apparent from the following detailed description taken with the accompanying drawings.

### BRIEF DESCRIPTION OF THE DRAWINGS

FIG. 1 is a top plan view of a piston pump according to the invention;
FIG. 2 is a partially broken away view of the piston pump;
FIG. 3 is a longitudinal sectional view of the piston pump; and
FIG. 4 is an exploded view of the piston pump.

### DETAILED DESCRIPTION OF THE INVENTION

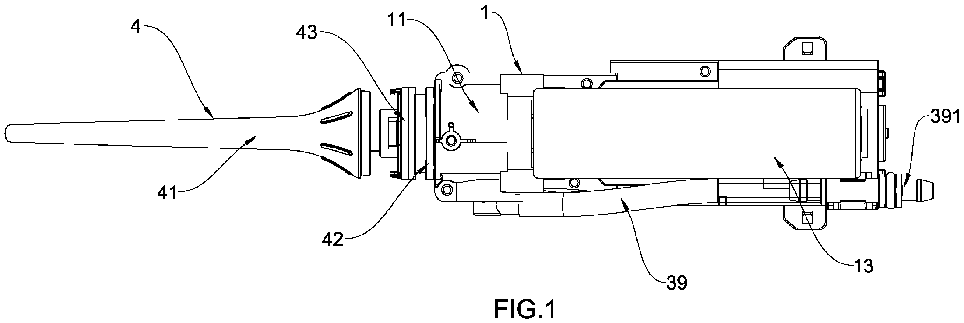

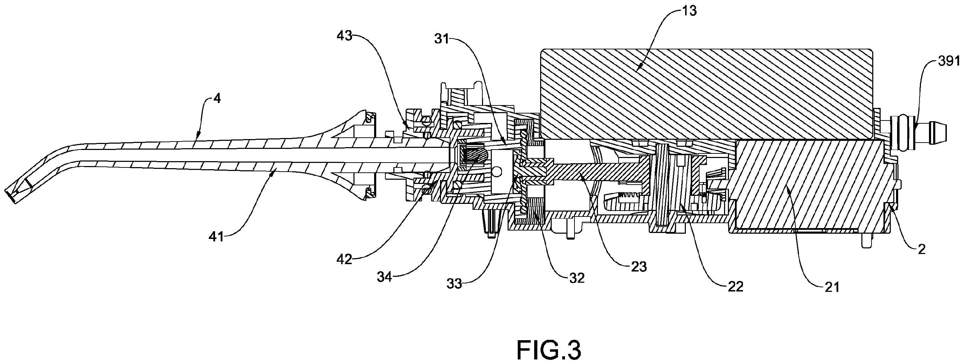

Referring to FIGS. 1 to 4, a piston pump in accordance with the invention comprises a housing 1, a driving assembly 2, a pump 3 and a nozzle assembly 4 as discussed in detail below.

The housing 1 includes an upper bracket 11 and a lower bracket 12. The driving assembly 2 is disposed in the housing 1 and includes a gear motor 21 and a piston 23 operatively connected to the gear motor 21. The pump 3 includes a pump body 31 disposed in the housing 1 and a pressing plate 32 disposed in the housing 1. The piston 23 has one end extending into the pump body 31. A pressing membrane 311 is disposed on the piston 23 and configured to seal a space between the pump body 31 and the piston 23. The pump body 31 cooperates with the housing 1 to position the pressing membrane 311. An intermediate portion of the pressing membrane 311 reciprocates as the piston 23 repeatedly moves back and forth. A pushing member 33 is disposed in the pump body 31 and cooperates with the pressing membrane 311 to further seal the pump body 31. One end of the pushing member 33 extends into the piston 23. An inlet 38 is adjacent to the pump body 31. The nozzle assembly 4 includes a nozzle 41 and a nozzle seat 42 disposed in the pump body 31.

Further, a disc type bevel gear 22 is disposed in the housing 1 and an output end of the gear motor 21 meshes with the disc type bevel gear 22. An eccentric bar 24 is disposed at a top of the disc type bevel gear 22. The eccentric bar 24 extends into the piston 23.

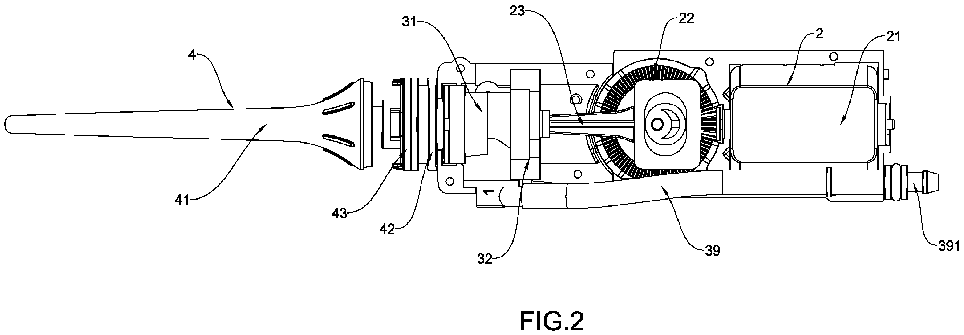

As shown in FIGS. 2 to 4 specifically, an activation of the gear motor 21 rotates the disc type bevel gear 22 which in turn rotates the eccentric bar 24 in the piston 23. Further, the piston 23 repeatedly moves the pushing member 33 back and forth in the pump body 31.

Moreover, a battery 13 is disposed in one side of the housing 1, the pressing plate 32 is disposed in the housing 1 and the pump body 31 is moveably disposed in the pressing plate 32 which is disposed in the housing 1. Thus, the pressing plate 32 is secured. As a result, a seal among the piston 23, the pressing plate 32 and the pump body 31 is achieved.

Further, an outlet valve 34 is disposed in the pump body 31 and has one end extended into the nozzle seat 42. An outlet spring 35 is disposed on the outlet valve 34 and an inlet switch pressing plate 341 is disposed at one end of the outlet spring 35. An inlet spring 36 is disposed in the inlet 38. The inlet spring 36 is put on an inlet valve 37. An outlet switch pressing plate 371 is disposed at one end of the inlet spring 36.

In a first operation, in response to the piston 23 moving the pushing member 33 in the pump body 31 to the left, the spring 35 on the outlet valve 34 is compressed. And in turn, the pushing member 33 pushes water in the pump body 31 to flow to the nozzle 41. As a result, the pressurized water exits the nozzle 41.

In a second operation, in response to the piston 23 moving the pushing member 33 in the pump body 31 to the right, the inlet spring 36 on the inlet valve 37 is compressed due to applied pushing force. And in turn, the inlet valve 37 is opened. Water is sucked into the pump body 31 through an inlet silicone hose 39. This eliminates the problem of the conventional unidirectional valve being damaged and ensures waterproofness.

One end of the inlet silicone hose 39 is connected to the inlet 38 and the other end thereof is disposed with an adapter 391. One end of the nozzle 41 is extended into the nozzle seat 42. An exposed lock 43 is disposed on one end of the nozzle 41 between the nozzle seat 42 and the main body of the nozzle 41. Sealing rings 5 are disposed on and inside the nozzle seat 42.

In response to the pump body 31 sucks water out of a water tank (not shown) through the adapter 391, water flows to inside of the pump body 31 through the inlet silicone hose 39 and the inlet 38. The provision of the sealing rings ensures waterproofness between the nozzle 41 and the nozzle seat 42.

In use, the inlet silicone hose 39 is connected to the water tank. An activation of the gear motor 21 rotates the disc type bevel gear 22 which in turn rotates the eccentric bar 24 in the piston 23. Further, the piston 23 repeatedly moves the pushing member 33 back and forth in the pump body 31.

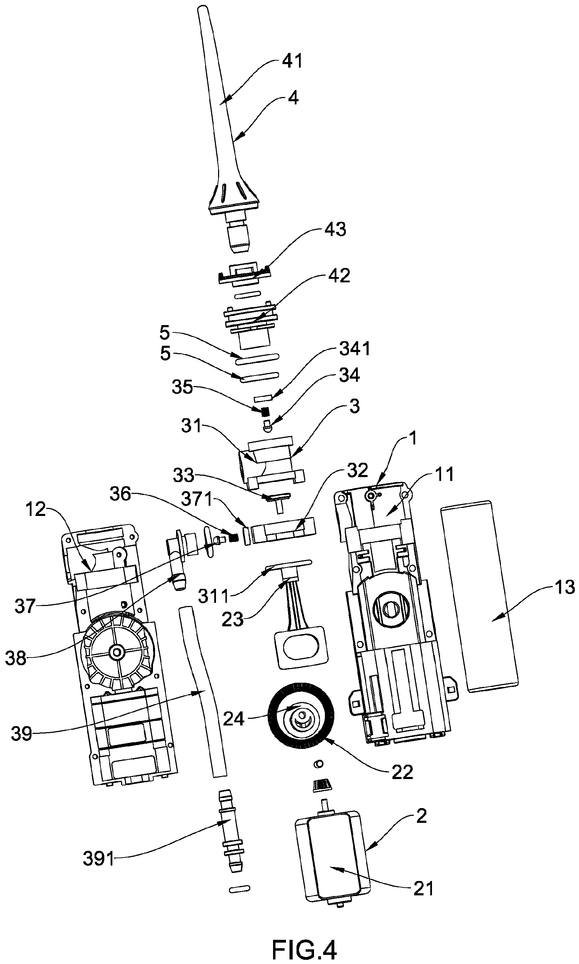

As shown in FIG. 4 specifically, in a first operation, in response to the piston 23 moving the pushing member 33 in the pump body 31 to the left, the outlet spring 35 on the outlet valve 34 is compressed. And in turn, the pushing member 33 pushes water in the pump body 31 to flow to the nozzle 41. As a result, the pressurized water exits the nozzle 41. In a second operation, in response to the piston 23 moving the pushing member 33 in the pump body 31 to the right, the inlet spring 36 on the inlet valve 37 is compressed due to applied pushing force. And in turn, the inlet valve 37 is opened. Water is sucked into the pump body 31 through the inlet silicone hose 39. Further, the outlet valve 34 is sucked together due to applied pushing force. As such, air is prevented from entering the outlet valve 34. Therefore, water in the water tank can be quickly sucked into the pump body 31. As a result, pressurized water continuously exits the nozzle 41.

The invention has the following characteristics and advantages: With the provision of the piston 23, the pump body 31, and the pushing member 33 which cooperates with the piston 23, ensures a waterproof seal when the piston 23 repeatedly moves forth and back. In comparison with the conventional waterproof pistons made of silicone, the piston pump of the invention has simplified components, improved seal of the pump body 31, waterproofness of the pump body 31 in use, and wide applications.

While the invention has been described in terms of preferred embodiments, those skilled in the art will recognize that the invention can be practiced with modifications within the spirit and scope of the appended claims.

## Claims

1. A piston pump, comprising a housing, a driving assembly, a pump, and a nozzle assembly wherein:
the housing includes an upper bracket and a lower bracket;
the driving assembly is disposed in the housing and includes a gear motor and a piston operatively transmission connection;
the pump includes a pump body disposed in the housing with one end of the piston extending thereinto, a pressing plate disposed in the housing, and a pressing membrane disposed on the piston and configured to seal a space between the pump body and the piston; the pump body cooperates with the housing to position the pressing membrane; an intermediate portion of the pressing membrane reciprocates as the piston repeatedly moves back and forth; the pump further comprises a pushing member disposed in the pump body and configured to cooperate with the pressing membrane to seal the pump body, and an inlet adjacent to the pump body; and one end of the pushing member extends into the piston; and
the nozzle assembly includes a nozzle and a nozzle seat disposed in the pump body.

2. The piston pump of claim 1, wherein the driving assembly further comprises a disc type bevel gear disposed in the housing, and wherein an output end of the gear motor meshes with the disc type bevel gear.

3. The piston pump of claim 2, wherein the driving assembly further comprises an eccentric bar disposed at a top of the disc type bevel gear, the eccentric bar extending into the piston.

4. The piston pump of claim 1, wherein the housing further comprises a battery disposed in one side of the housing, wherein the pressing plate is disposed in the housing, and wherein the pump body is moveably disposed in the pressing plate.

5. The piston pump of claim 1, wherein the pump further comprises an outlet valve disposed in the pump body, the outlet valve having one end extended into the nozzle seat.

6. The piston pump of claim 5, wherein the pump further comprises an outlet spring disposed on the outlet valve and a first pressing plate disposed at one end of the outlet spring.

7. The piston pump of claim 1, wherein the pump further comprises an inlet spring disposed in the inlet, an inlet valve with the inlet spring put thereon, and a second pressing plate disposed at one end of the inlet spring.

8. The piston pump of claim 1, wherein the pump further comprises an inlet silicone hose having one end connected to the inlet, and an adapter disposed at the other end of the inlet silicone hose.

9. The piston pump of claim 1, wherein one end of the nozzle extends into the nozzle seat, and the nozzle assembly further comprises a lock disposed on one end of the nozzle proximate the nozzle seat.

10. The piston pump of claim 1, further comprising a plurality of sealing rings disposed on and inside the nozzle seat.
